# EUROPEAN PATENT SPECIFICATION

(11) **EP 2 438 795 B1**
(45) Date of publication and mention of the grant of the patent: **12.08.2015**
(21) Application number: 10717099.5
(22) Date of filing: 21.04.2010
(51) Int. Cl.: H04W 92/02

(54) **METHOD FOR INTERCONNECTING TWO PRIVATE MOBILE RADIO NETWORKS**
VERFAHREN ZUM VERBINDEN ZWEIER PRIVATER MOBILFUNKNETZE
PROCÉDÉ D'INTERCONNEXION DE DEUX RÉSEAUX RADIO MOBILES PRIVÉS

(30) Priority: 04.06.2009 EP 09161928
(43) Date of publication of application: 11.04.2012
(73) Proprietor: Atos IT Solutions and Services AG, 8047 Zürich (CH)
(72) Inventor: MÄCHLER, Patrick, CH-8614 Sulzbach (CH)
(74) Representative: Patentanwaltskanzlei WILHELM & BECK
(86) International application number: PCT/EP2010/055240
(87) International publication number: WO 2010/139506

(56) References cited:
- EP-A- 1 926 275
- US-A1- 2004 120 474
- KASHIF MEHBOOB ET AL: "TETRA Technology: A Modern Private Cellular System" ENGINEERING SCIENCES AND TECHNOLOGY, 2005. SCONEST 2005. STUDENT CONFE RENCE ON, IEEE, PI, 1 August 2005 (2005-08-01), pages 1-5, XP031161068 ISBN: 978-0-7803-9441-4
- TETRAPOL FORUM: "TETRAPOL Specifications; Part 10: Inter System Interface; Part 1: ISI Technical Requirements; PAS 0001-10-1" [Online] 16 December 1996 (1996-12-16), TETRAPOL SECRETARIAT , BOIS D'ARCY CEDEX - FRANCE , XP002553593 Retrieved from the Internet: URL:http://www.tetrapol.com/web/PAS/10-1v1 11.pdf> the whole document

## Description

The present invention relates to a method for interconnecting two Private Mobile Radio networks - PMR-networks - according to the preamble of claim 1, and to PMR networks according to claim 9.

### BACKGROUND OF THE INVENTION

Mobile communications systems refer generally to any telecommunications system which enables e wireless communication when users are moving within the service areas of the system. A typical mobile communications system is a public land mobile network (PLMN). Often the mobile communications network is an access network providing a user with e wireless access to external networks, hosts, or services offered by specific service providers.

TETRA (Terrestrial Trunked Radio) is a standard defined by ETSI (European Telecommunications Standard institute) for private mobile radio (PMR) systems. The TETRA system is developed primarily for professional and governmental users, such as police, military forces, oil plants, etc.

TETRAPOL is a digital Professional Mobile Radio standard, as defined by the TETRAPOL Publicly Available Specification (PAS), like TETRA in use by professional user groups, such as public safety, military, industry and transportation organizations throughout the world.

PROJECT 25 (P25) or APCO-25 refers to a suite of standards for digital radio communications for use by federal, state/province and local public safety agencies in North America to enable them to communicate with other agencies and mutual aid response teams in emergencies. In this regard, P25 fills the same role as the European TETRA protocol, although not interoperable with it.

### State of the Art

The basic requirement is to connect an PMR infrastructure (e.g. TETRA, TETRAPOL, APCO-25) over a PMR-Gateway in order to provide several voice services such as Group Call. A «group» refers to any logical group of three or more users (also denoted by subscriber) intended to participate in the same group communication, e.g. call., further details regarding groups may be derived from paragraph [0004] in US 2004/0120474 A1 [5].

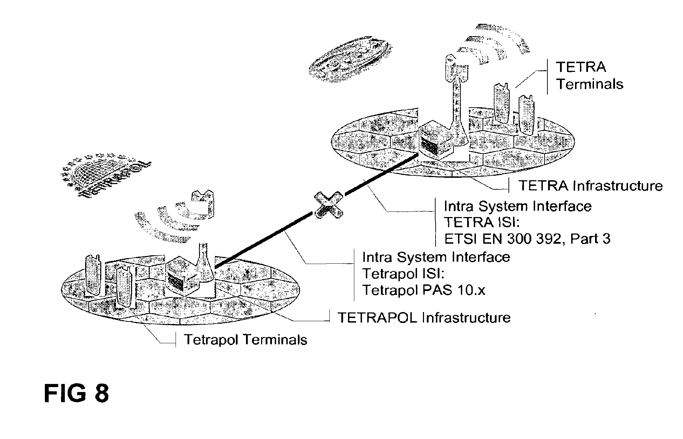

Current standardized Inter System Interfaces ISI on PMR-networks base on the idea of Switching and Management Infrastructure «SwMI» on system level. The Switching and Management Infrastructure of a PMR-network comprises at least one Switching Center SC and a Base Station BS; this is not shown in detail in Fig. 8.

The current standards between TETRA in ETSI EN 300 392-3 [3] and Tetrapol in PAS 10.x [4] are not compliant and a standardized communication between those two standards is not possible. Details for this situation are shown in Fig. 8.

The fundamental concepts of the ISI-Interface for a TETRA network are as follows:
- The ISI communication between the infrastructures is on system level. For a selected group call (or other call type), one of the SwMI becomes master and handles call requests for all users joining the call.
- If an end-to-end encrypted group call is established, all terminals must have the same encryption algorithm and the corresponding encryption keys. This needs an exchange of all security keys between the interoperating systems, even over country borders.
- On call requests, the system must wait until resources are available on all interconnected infrastructures. This could result in longer waiting queues, because one foreign system is low on resources (e.g. free carriers / timeslots).

While the Inter System Interface Concept has mayor advantages over the PMR-Gateway Concept in Country-Wide networks, it lacks severe security defects (external resource control, E2EE harmonization, Secret Key exchange) when a communication over a country border has to be established.

In paragraphs [0263] and [0265] of US 2004/0120474 A1 [5] there is an alternative model for encryption disclosed: two-leg end-to-bridge-to-end encryption: Mobile station MS1 encrypts the payload of the voice packets for sending to a proxy. The proxy decrypts the packets and then encrypts them again for forwarding to a mobile station MS2. This provides almost the same level of security to the users as does end-to-end encryption. In this case there is no need for the communication parties to share keys. Therefore the usual key management problems associated with end-to-end encryption are avoided.

It is therefore an object of the present invention to overcome the drawbacks of the (standardized) state of the art and to allow services from a PMR-network to another PMR-network without exchanging keys for encryption. The meaning of «another PMR-network» is either a PMR-network of the same technology as e.g. Tetrapol but operated by a different organization or an PMR-network of another technology, as TETRA or TETRAPOL. The above mentioned problem with a key exchange arises also with two TETRAPOL networks, which belong to two different countries or organizations.

This object is solved according to the present invention by a method and a system with the features given in claim 1 and 9 respectively.

The invention completely bases on the idea on a loosely coupling the PMR infrastructures on terminal level. The PMR gateway offers several concepts to solve Push-To-Talk collisions such as a Push-To-Talk buffer or a solution using the supplementary service Access Priority AP.

The invention also describes the strategy how to behave with end-to-end encrypted communications without exchanging secret keys over country borders.

The present invention is able to handle simultaneous or nearly simultaneous Push-To-Talk conflicts, if from both networks such a PTT-request occurs at the (nearly) same time.

Preferred embodiments of the present invention are hereinafter described more in detail with reference to the accompanying drawing, wherein are shown:
Figure 1
   general overview of a PMR Gateway;
Figure 2
   architecture of interconnecting a TETRA with a TETRAPOL Infrastructure;
Figure 3
   End-to-End encryption strategy;
Figure 4
   establishing group calls;
Figure 5
   establishing individual calls over a dispatcher at Dispatcher-Terminal;
Figure 6
   PTT-buffer;
Figure 7
   PTT conflict solution using the supplementary service Access Priority AP;
Figure 8
   current situation (state of the art) for connecting two different networks; the standards between TETRA (ETSI EN 300 392, Part 3 [3]) and Tetrapol (Tetrapol PAS 10.x [4]) are not compliant and a standardized communication between those two PMR-networks is not possible.

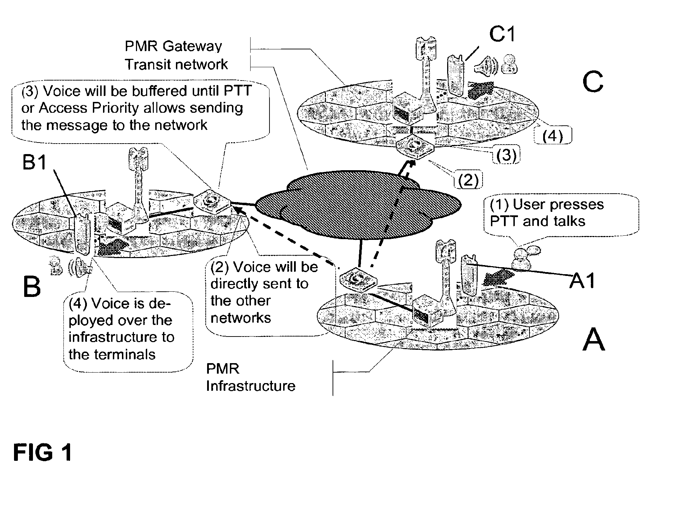

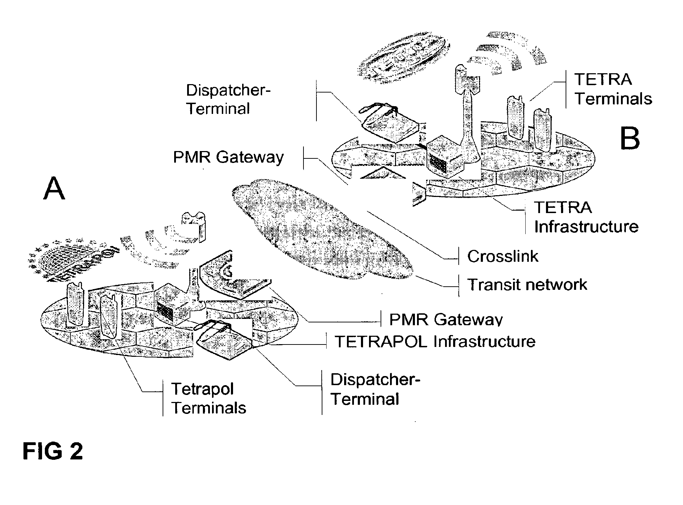

Fig. 2 shows two different PMR-networks A and B. In the context of Fig. 2 the term «different» has the following significance:
i) The PMR Network A is a TETRAPOL network, e.g of the national security in Switzerland
ii) The PMR Network is a TETRA network, e.g. of the police of Baden-Württemberg in Germany.
The TETRAPOL Terminals as well as the TETRA terminals in Fig. 2 are assumed to be located in a overlapping area at the border of Switzerland and Germany. For a common operation of the border control the officers using these before mentioned terminals need a communication via PTT (Push to talk) in order to intervene commonly. The (wired) connection between The PMR Network A and PMR Network B is done by a transit network provided with a crosslink to a PMR Gateway of each PMR-network. It has to be noted this interconnection is not based on the - per PMR TETRA or TETRAPOL standard - defined ISI recommendations [4]. A supplier specific dispatcher interface is used, available on every PMR system. The basic idea of the present invention is, that the PMR Gateway simulates line connected terminals (or talk groups) with up to dispatcher capabilities (configurable, system dependent).

While the Inter System Interface ISI builds real talk groups, the PMR Gateway interconnects individual Talk Groups per PMR-network, when the virtual device participates the Talk Group.

The components and their functionality are described in the following table 1. Each virtual (in another term also denoted by emulated) device of a PMR Gateway in the first PMR-network A is connected with the other virtual device "Bx" of the other PMR Gateway in the foreign PMR-network B over a crosslink. The term virtual is to be understood as a mapping of a real device in the corresponding PMR Gateway.

**Table 1: Components**

| **Component** | **Description** |
|---|---|
| TETRA Terminals | TETRA terminals can act as mobile phones (cell phones), with a direct connection to the PSTN. It is common also for them to operate in a group calling mode in which a single button push will connect the user to a dispatcher at a |
| | Dispatcher-Terminal and all the other users in a group, which was predefined. It is also possible for the terminal to act as a one-to-one walkie talkie but without the normal range limitation since the call still uses the network. Emergency buttons, provided on the terminals, enable the users to transmit emergency signals, to the dispatcher, overriding any other activity taking place at the same time. |
| TETRA Infrastructure | TETRA uses Time Division Multiple Access (TDMA) with four user channels on one radio carrier and 25 kHz spacing between carriers. Both point-to-point and point-to-multipoint transfer can be used. Digital data transmission is also included in the standard though at a low data rate. |
| | TETRA Mobile Stations MS can communicate in a Direct Mode or using Trunked Infrastructure (Switching and Management Infrastructure or SwMI) made of TETRA Base Stations TBS) As well as allowing direct communications in situations where network coverage has been lost, Direct Mode DMO also includes the possibility of using one (or a chain) of TETRA terminals as relays for a signal. This functionality is called a DMO gateway (from DMO to TMO) or DMO Repeater (DMO to DMO). In rescue situations this feature could allow direct communications underground or in areas of bad coverage. |
| | In addition to voice and dispatch services, the TETRA system supports several types of data communication. Status messages and short data services (SDS) are provided over the system's main control channel, while Packet Data or Circuit switched data communication uses specifically assigned traffic channels. |
| | All traffic is normally encrypted. TETRA provides both over the air encryption and end-to-end encryption. |
| PMR Gateway | The PMR Gateway will terminate all E2E encryption and PMR specific encodings (if any), inherit the PMR specific (e.g. TETRA, TETRAPOL) signalization and transfer the voice & and call specific data to the foreign PMR system. Main rule for data exchange: View as possible, as much as necessary. |
| PMR Gateway Crosslink | The PMR Gateway Crosslink consists of multiple security layers. |
| | • Physical & Data Link Layer |
| | IP Network connection |
| | • Network Layer |
| | Securing each SwMI PMR Gateway to SwMI PMR Gateway Connection by VPN |
| | • Session Layer |
| | Using SSL/TLS for Signalization and data connections, SRTP/ZRTP for voice streams |
| | • Application Layer |
| | Triple A (Authentication, Authorization & Access) between PMR Gateways |
| TETRAPOL Terminals | TETRAPOL commonly operate in a group calling mode in which a single button push will connect the user to a dispatcher and all the other users in a group. It is also possible for the terminal to act as a one-to-one walkie talkie but without the normal range limitation since the call still uses the network. Emergency buttons, provided on the terminals, enable the users to transmit emergency signals, to the dispatcher, overriding any other activity taking place at the same time. |
| TETRAPOL Infrastructure | TETRAPOL is a digital Professional Mobile Radio standard, as defined by the TETRAPOL Publicly Available Specification (PAS), in use by professional user groups, such as public safety, military, industry and transportation organizations. |
| | The technology implemented in TETRAPOL networks is the frequency division multiple access (FDMA) technology using a narrow-band channel with a frequency step of 12.5 kHz, with GMSK modulation (as opposed to the TETRA technology which implements time division multiple access (TDMA) at 25 kHz with n/4 DQPSK). |

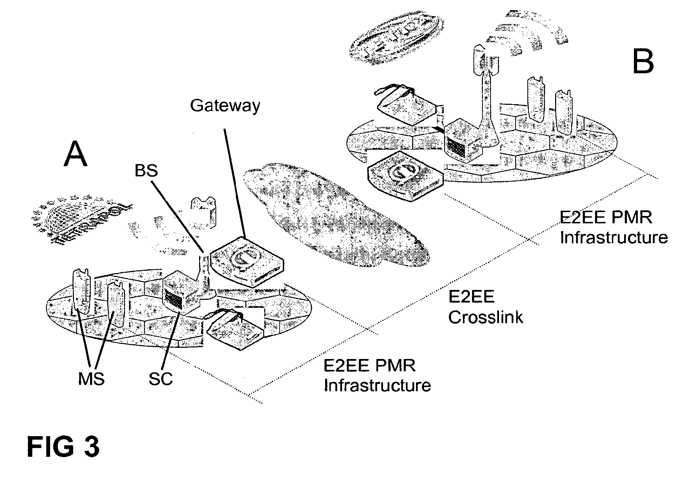

The End-to-End Encryption E2EE is described by Fig 3: Due to different country laws and security regulations, the PMR Gateway has to terminate the end-to-end encryption for the PMR Infrastructure and re-encrypt the voice and data streams for the crosslink's. This solution prevents countries and/or security organizations to exchange their PMR Infrastructure encryption keys. A considerable advantage of the solution according to the present invention is, there is no need for an end-to-end encryption algorithm as required for an ISI interconnection. The embodiment of the present invention foresees own encryption keys per foreign network valid for transportation of voice and data over the crosslink / country border. The segments of individual encryption - see Fig. 3 - are denoted by
- E2EE PMR Infrastructure A,
- E2EE Crosslink,
- E2EE PMR Infrastructure B.
Fig. 3 is also used to introduce the basic elements as the terminals MS, the base station BS and the switching center SC. The «fixed» parts as switching center SC and base station BS are summarized under the term Switching and Management Infrastructure SwMC or unspecifically under PMR Infrastructure, specifically they are summarized under TETRAPOL-infrastructure and TETRA-infrastructure.

In the context of encryption it has to be noted, that the before mentioned encryption is subscriber based. Additionally both systems TETRA and TETRAPOL comprise for the Air Interface AI an encryption for the radio transmission between a terminal/ terminal or between terminal and Base Station BS of the PMR-network.

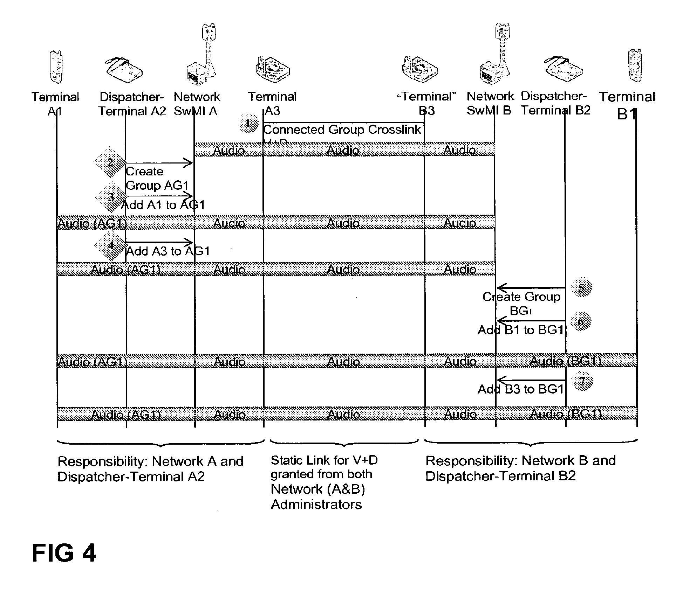

The establishment of a group call is explained with the diagram in Fig. 4 and table 2 below. First a definition of a group call: From a single terminal or from a Dispatcher-Terminal a call to a plurality to other terminals or Dispatcher-Terminals is established in order to give a specific order to the persons behind the terminals and/or Dispatcher-Terminals. A group can be defined by a dispatcher. For the sake of an easy legibility in the following tables and description not allways is a clear distinction made between a person (=dispatcher) and his terminal (=Dispatcher-Terminal). But from the context there should be no ambiguity about the technical background.

**Table 2: Establishing Group Calls**

| **Step** | **Description** |
|---|---|
| 1 | The crosslink is already established. The audio is connected to both networks, but not in an active talk group. |
| 2 | Dispatcher at the Dispatcher-Terminal A2 creates (or uses) group AG1. The establishment of Talk Groups, MOCH's, DGNA, etc. is vendor and PMR standard specific and varies. |
| 3 | Dispatcher A2 adds Terminal A1 to the group AG1. |
| 4 | Dispatcher A2 adds Terminal A3 (PMR Gateway) to the group AG1. The audio is now forwarded to network B. Because Terminal B3 is not member of a group in network B, no communication to network B is possible at the current state of the connection. |
| 5 | Dispatcher A2 creates (or uses) group BG1. |
| 6 | Dispatcher B2 adds Terminal B1 to the group BG1. |
| 7 | Dispatcher B2 adds Terminal B3 (PMR Gateway) to the group BG1. All necessary audio streams are now connected and a communication between Terminal A1 and Terminal B1 is now established. |

The mentioned group call establishment is an example to visualize the functional concept of a PMR architecture. According to ETSI EN 300 392-1 [1], the call establishment would comprise:

The call set-up request is started by an up-link message <U-SETUP> from the MS. The SwMI may optionally acknowledge the call set-up request by sending a down-link message <D-CALL PROCEEDING> to indicate that the call is being processed.

If, following the receipt of a <U-SETUP> message, the SwMI determines that for some reason the call cannot be supported, then the SwMI initiates call clearing.

If the call can be supported, the SwMI sends a down-link message(s) <D-SETUP> to the called MS.

During, or as an option upon completion of, the transmission of the <D-SETUP> message, the SwMI may send a <D-CONNECT> message to the calling MS.

On completion of this procedure communication can commence.

The option depends upon whether the group call is an acknowledged one. If it is acknowledged, the SwMI may delay the transmission of the <D-CONNECT> message to the calling MS, and wait for acknowledgements from the called MS before proceeding. If at this stage the SwMI decides that the call cannot be supported it initiates call clearing.

If the group call is acknowledged, the call owner may be informed of the presence of the other members of the group in the <D-INFO> message.

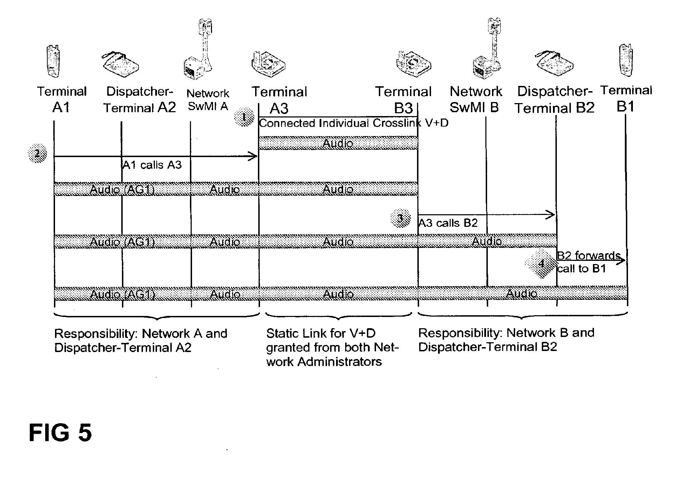

With the diagram in Fig 5 and table 3 below the establishing of individual call from a terminal A1 in PMR-network A to a terminal B1 in PMR-network B is disclosed.

**Table 3: Establishing Group Calls**

| **Step** | **Description** |
|---|---|
| 1 | The crosslink is already established. The audio is connected between the PMR Gateways. |
| 2 | A person behind the terminal A1 creates an individual call to terminal A3. PMR Gateway terminal A3 sends the call request to PMR Gateway terminal B3. |
| 3 | PMR Gateway Terminal B3 calls the predefined number of a dispatcher behind Dispatcher-Terminal B2. |
| 4 | dispatcher B2 forwards the call to Terminal B1. |

Another typical functionality within a PMR-network is the feature «Push-To-Talk» PTT. This feature allows a person, to press a button on its terminal and to broadcast directly a message via the network to other (specified) terminals. The term «specified» means in this context e.g. a group of soldiers or fire men at a certain place or belonging to a organizational unit.

The concept of loosely coupling a network A with a (foreign) network B allows preventing negative influences from the (foreign) network B . But this concept does not guarantee that both networks have granted talk permission for a terminal. In a special embodiment of the present invention two (sub-) concepts solve this problem via
- PTT buffer;
- Access Priority.

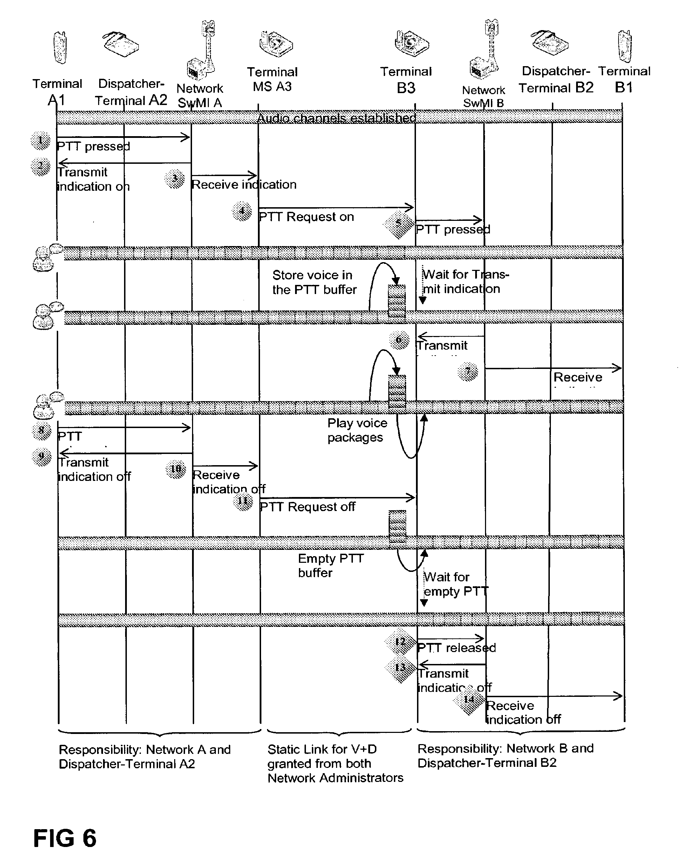

The concept of a PTT buffer can be derived in details from Fig. 6 together with the indications given in table 4.

**Table 4: PTT buffer**

| **Step** | **Description** |
|---|---|
| 1 | Terminal A1 presses Push to Talk. |
| 2 | Network A grants talking of Terminal A1 and sends Transmit indication on to Terminal A1 |
| 3 | Network A informs all participating Terminals including Terminal A3 with Receive indication on |
| 4 | The PMR Gateway of Network A sends the Push to Talk Request on to PMR Gateway at Network B. |
| 5 | PMR Gateway Terminal B3 sends the Push to Talk request to Network B. Meanwhile the user of Terminal A1 starts talking and the voice stream sends audio data to the PMR gateway on Network B. Because the PMR Gateway on Network B did not receive the Transmit Indication on from Network B, it buffers the voice stream in the PTT buffer. |
| 6 | The PMR Gateway on Network B receives the Transmit indication on. It will now start playing the stream from the PTT buffer to Network B. |
| 7 | Terminal B1 receives the Receive Indication on. |
| 8 | Terminal A1 releases Push to Talk. |
| 9 | PMR-network A sends Transmit Indication off to Terminal A1. |
| 10 | PMR-network A informs all participating Terminals including Terminal A3 with Receive indication off |
| 11 | The PMR Gateway of PMR-network A sends the Push to Talk Request off to PMR Gateway at PMR-network B. |
| 12 | PMR Gateway of PMR-network B waits until the PTT buffer is empty and sends the PTT released to the PMR-network B |
| 13 | Network B sends Transmit Indication off to PMR Gateway Terminal B3. |
| 14 | Network B sends Receive Indication off to Terminal B1. |

The signalization has been described in a very general way. In order to be in line with the terminology in ETSI EN 300 392-1 [1] the above mentioned terms terminal and dispatcher are denoted by mobile station MS. According to ETSI EN 300 392-1 [1] a request to transmit would be signalized with the following quoted steps:

The SwMI is in full control over which MS is allowed to transmit because the MS is obliged to request permission to transmit, and permission must be granted before the MS can do so.

It is normal system operation that the calling MS will be given the permission to transmit immediately upon call set-up.

Traffic channel assignment will be done by SwMI.

When the awarded MS has finished the communication it sends a <U-TX CEASED>

Upon receipt of the <U-TX CEASED> message, the SwMI sends a <D-TX CEASED> message to the "receiving" MS to inform them that the transmission has now ceased. The SwMI awaits further demands from the calling and called MS. When any MS wishes to make a request to transmit, it sends a <U-TX DEMAND> message.

During any call, a <U-TX DEMAND> message may be sent by any MS. If any other MS is not already transmitting, then the SwMI may response with a <D-TX GRANTED> message sent to the awarded MS addressed by his Individual TETRA Subscriber Identity (ITSI), and a <D-INFO> sent to the remaining MS addressed by the Group TETRA Subscriber Identity (GTSI).

If a <U-TX DEMAND> message is sent and another MS is already transmitting, then the SwMI sends <D-TX GRANTED> with "transmission request queued" and waits for that MS to finish its transmission, (identified by the receipt of a <U-TX CEASED> message). Subsequently the SwMI sends a <D-TX GRANTED> message to the requesting MS addressed by his ITSI, awarding permission to transmit, and another <D-TX GRANTED> message to the remaining MS, addressed by the GTSI.

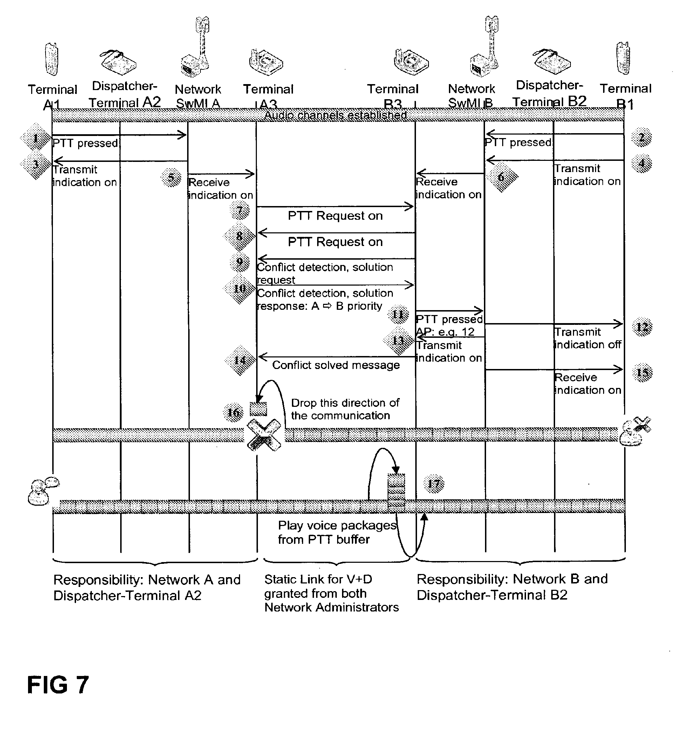

The other concept with Access Priority (see above) is explained with Fig 7 and with table 5. Access Priority is a supplementary service in TETRA (defined in [2]) as well as in TETRAPOL (see [3] ).

**Table 5 PTT conflict resolution with the supplementary service Access Priority AC.**

| **Step** | **Description** |
|---|---|
| 1 | Terminal A1 pushes PTT. |
| 2 | At the same time Terminal B1 presses PTT in Network B. |
| 3 | Terminal A1 receives the acknowledgement from Network A to talk. |
| 4 | Terminal B1 receives the acknowledgement from Network B to talk. |
| 5 | PMR Gateway in network A receives the Receive Indication on and the corresponding voice stream starts. |
| 6 | PMR Gateway in PMR-network B receives the Receive Indication on and the corresponding voice stream starts. |
| 7 | PMR Gateway in PMR-network A sends the PTT Request on to PMR Gateway in PMR-network B. |
| 8 | PMR Gateway in PMR-network B sends the PTT Request on to PMR Gateway in PMR-network A. |
| 9 | PMR Gateway in PMR-network B (and network A) detects the PTT conflict and send a solution request to evaluate which talking party shall by overruled by an interrupting PTT request. |
| 10 | PMR Gateway in PMR-network A sends the response (based on various parameters) that the communication from network A to network B (Terminal A1) shall be preferred. |
| 11 | PMR Gateway in PMR-network B sends now a push to Talk request with intervening Access Priority (e.g. TETRA: AP 12-15) |
| 12 | Network B will drop the Transmit Indication for Terminal B1. |
| 13 | PMR Gateway in network B will receive the Transmit Indication on message for talk permission. |
| 14 | PMR Gateway in network B will send the PMR Gateway in network A the message that the conflict has been solved. |
| 15 | Terminal B1 will receive the Receive indication on message. |
| 16 | PMR Gateway in network A will drop the audio received from terminal B1. |
| 17 | PMR Gateway in network B will start sending the audio from the PTT buffer to network B. |

The before mentioned embodiments of the present invention are not limited to two different PMR-networks. The invention can - based on the before disclosed solutions also be implemented to a PMR-network A, which is connected to at least two PMR-networks B and C. The invention is applicable alos for a PMR-network C connected to two different PMR-networks A and B and this PMR-network C allowing transit connections between the two different PMR-networks B and C.

### List of used reference signs

- A, B, C: PMR-network
- A1, B1, C1: a first mobile terminal, e.g. a station or dispatcher in a PMR Network A, B, C
- A2, B2, C2: a second mobile terminal, e.g. a station or dispatcher in a PMR Network A, B, C
- A3, B3, C3: a third mobile terminal, e.g. a station or dispatcher in a PMR Network A, B, C
- E2E: end-to-end
- E2EE: End-to-End Encryption
- SwMI A, SwMI B, SwMI C: Switching and Management Infrastructure in a PMR Network A, B, C
- PTT: Push-to-Talk

### List of used acronyms

- BS: Base Station
- DGNA: Dynamic Group Number Assignment
- DMO: Direct Mode Operation
- ETSI: European Telecommunications Standard Institute
- ISI: Inter System Interfaces
- MOCH's: Mulitsite Open Channels
- MS: Mobile Station
- PMR: Private Mobile Radio, sometimes called Professional Mobile Radio, source ETSI
- SC: Switching Center
- SRTP/ZRTP: Secure Realtime Transport Protocol
- ZRTP: Media Path Key Agreement for SRTP
- SSL/TLS: Secure Socket Layer/Transport Layer Security
- SwMI: Switching and Management Infrastructure of one network comprising at least a Switching Center
- TETRA: Base Stations TBS
- TDMA: Time Division Multiple Access
- TETRA: Terrestrial Trunked Radio
- TMO: Trunked Mode Operation

### List of cited Literature

- [1]: ETSI EN 300 392-1
Part 1: General Network design
- [2]: ETSI EN 300 392-12-10
Part 10: Supplementary Services stage 1, Sub-Part 9; Access Priority.
- [3]: ETSI EN 300 392-3
Part 3: Interworking at the Inter-System Interface ISI; Sub-Part1: General design
- [4]: Tetrapol PAS 10.x
Part 10: Inter System Interface ISI
Part 1: ISI Technical Requirements
Part 2: ISI Architecture
Part 3 ISI Protocol Design
Part 4: ISI Conformance Testing Specification Publicly available specifications PAS: http://www.tetrapol.com
- [5]: US 2004/'120474 A1
«Packet mode speech communication» Lopponen et al.

## Claims

1. A method for interconnecting Private Mobile Radio PMR networks (A, B, C), in the following denoted by PMR-networks, each PMR-network (A, B, C) comprising
i) at least one PMR-Switching Center (SC) and at least one base station (BS);
ii) terminals (A1, A2, ..; B1, B2, ..) being connectable within one PMR-network (A, B) via the base station (BS) and the PMR-Switching Center (SC, SwMI) and the connection being encrypted within said PMR-network (A, B);
iv) a PMR-gateway for each PMR-network (A, B) connected with said PMR-network (A, B) also being connectable to the other PMR-network (B, A) via a crosslink;
further **characterized by** the steps
v) when a request for establishing a call from one terminal (A1, A2, ..) of one PMR-network (A) to a specific terminal (B1, B2) of the other PMR-network (B) occurs, the requesting terminal (A1, A2, ..) being mapped as a virtual terminal in the PMR-Gateway;
vi) the virtual terminal requesting a call to a virtual terminal of the specific terminal (B1, B2, ..) mapped in the PMR-gateway of the other PMR-network (B) and the virtual terminal in the PMR-gateway of the other PMR-network (B) establishing a call to the specific terminal (B1, B2); where an end-to-end encryption is assigned only within each PMR-network and within the crosslink.

2. The method according to claim 1,
wherein
the request is for a push-to-talk PTT service.

3. The method according to claim 1 or 2,
wherein
in step vi) establishing a call from the PMR-gateway in the other PMR-network (B) to the specific terminal (B1, B2, ..) is depending on
a condition on the status of the specific terminal (B1, B2, ..).

4. The method according to claim 3,
wherein
the condition is based on a call request originating from the specific terminal (B1, B2, ..) and a solution request is invoked in order to evaluate which terminal (A1, A2, ..; B1, B2, ..) shall be overruled according to its predefined priority.

5. The method according to claim 3,
wherein
speech originating from the terminal (A1, A2, ..) requesting the specific terminal (B1, B2, ..) is buffered until the specific terminal (B1, B2, ..) allows the requested call.

6. The method according to claim 5,
wherein
the buffering of the speech occurs in the PMR-gateway of the other PMR-network (B).

7. The method according to one of the claims 1 to 6,
wherein
in step v) the request for establishing a call from one terminal (A1, A2, ..) of one PMR-network (A) occurs to a plurality of specific terminals (B1, B2) in the other PMR-network, which have been defined previously.

8. The method according to one of the claims 1 to 7,
wherein
the switching centers (SC, SwMI) assign channels in the crosslink independently from the requested calls from one PMR-network (A) to the other PMR-network.

9. PMR-networks (A, B, C) having means for performing the steps of the method for interconnecting at least two Private Mobile Radio PMR networks (A, B, C) according to one of the claims 1 to 8.

## Patentansprüche

1. Verfahren zum Verbinden privater Mobilfunknetze, PMR-Netze, (A, B, C), im Folgenden als PMR-Netze bezeichnet, wobei jedes PMR-Netz (A, B, C) Folgendes umfasst:
i) wenigstens eine PMR-Vermittlungsstelle (SC) und wenigstens eine Basisstation (BS);
ii) Endgeräte (A1, A2, ...; B1, B2, ...), die innerhalb eines PMR-Netzes (A, B) über die Basisstation (BS) und die PMR-Vermittlungsstelle (SC, SwMI) verbunden werden können, wobei die Verbindung innerhalb des PMR-Netzes (A, B) verschlüsselt wird;
iv) ein PMR-Gateway für jedes mit dem PMR-Netz (A, B) verbundene PMR-Netz (A, B), das über eine Querverbindung ebenfalls mit dem anderen PMR-Netz (B, A) verbunden werden kann;
ferner **gekennzeichnet durch** die folgenden Schritte:
v) Wenn eine Anforderung zum Aufbauen eines Anrufs von einem Endgerät (A1, A2, ...) eines PMR-Netzes (A) zu einem spezifischen Endgerät (B1, B2) des anderen PMR-Netzes (B) auftritt, wird das anfordernde Endgerät (A1, A2, ...) in dem PMR-Gateway als ein virtuelles Endgerät abgebildet;
vi) das virtuelle Endgerät fordert einen Anruf zu einem virtuellen Endgerät des spezifischen in dem PMR-Gateway des anderen PMR-Netzes (B) abgebildeten Endgeräts (B1, B2, ...) an und das virtuelle Endgerät in dem PMR-Gateway des anderen PMR-Netzes (B) baut einen Anruf zu dem spezifischen Endgerät (B1, B2) auf; wobei nur innerhalb jedes PMR-Netzes und innerhalb der Querverbindung eine durchgehende Verschlüsselung zugewiesen wird.

2. Verfahren nach Anspruch 1,
wobei
die Anforderung eine für einen Gesprächsübergabe-Dienst, PTT-Dienst, ist.

3. Verfahren nach Anspruch 1 oder 2,
wobei
in Schritt vi) das Aufbauen eines Anrufs von dem PMR-Gateway in dem anderen PMR-Netz (B) zu dem spezifischen Endgerät (B1, B2, ...) von einer Bedingung an den Status des spezifischen Endgeräts (B1, B2, ...) abhängt.

4. Verfahren nach Anspruch 3,
wobei
die Bedingung auf einer Anrufanforderung beruht, die von dem spezifischen Endgerät (B1, B2, ...) ausgeht, und eine Lösungsanforderung aufgerufen wird, um zu bewerten, welches Endgerät (A1, A2, ...; B1, B2, ...) in Übereinstimmung mit seiner vorgegebenen Priorität zurückgewiesen werden soll.

5. Verfahren nach Anspruch 3,
wobei
Sprache, die von dem Endgerät (A1, A2, ...) ausgeht, das das spezifische Endgerät (B1, B2, ...) anfordert, gepuffert wird, bis das spezifische Endgerät (B1, B2, ...) den angeforderten Anruf zulässt.

6. Verfahren nach Anspruch 5,
wobei
das Puffern der Sprache in dem PMR-Gateway des anderen PMR-Netzes (B) stattfindet.

7. Verfahren nach einem der Ansprüche 1 bis 6,
wobei
in Schritt v) die Anforderung zum Aufbauen eines Anrufs von einem Endgerät (A1, A2, ...) eines PMR-Netzes (A) zu mehreren spezifischen Endgeräten (B1, B2) in dem anderen PMR-Netz, die zuvor definiert worden sind, auftritt.

8. Verfahren nach einem der Ansprüche 1 bis 7,
wobei
die Vermittlungsstellen (SC, SwMI) Kanäle in der Querverbindung unabhängig von den angeforderten Anrufen von einem PMR-Netz (A) zu dem anderen PMR-Netz zuweisen.

9. PMR-Netze (A, B, C) mit Mitteln zum Ausführen der Schritte des Verfahrens zum Verbinden wenigstens zweier privater Mobilfunknetze, PMR-Netze, (A, B, C) gemäß einem der Ansprüche 1 bis 8.

## Revendications

1. Procédé d'interconnexion de réseaux Radio Mobiles Privés PMR (Private Mobile Radio) (A, B, C), désignés ci-après réseaux PMR, chaque réseau PMR (A, B, C) comprenant
i) au moins un Centre de Commutation (SC) PMR et au moins une station de base (BS) ;
ii) des terminaux (A1, A2, .. ; B1, B2, ..) pouvant être connectés au sein d'un réseau PMR (A, B) via la station de base (BS) et le Centre de Commutation (SC, SwMI) et la connexion étant cryptée au sein dudit réseau PMR (A, B) ;
iv) une passerelle PMR pour chaque réseau PMR (A, B) connectée audit réseau PMR (A, B) pouvant également être connectée à l'autre réseau PMR (B, A) via une liaison croisée ;
**caractérisé en outre par** les étapes consistant à v) lorsqu'une demande d'établissement d'un appel depuis un terminal (A1, A2, ..) d'un réseau PMR (A) vers un terminal spécifique (B1, B2) de l'autre réseau PMR (B) se produit, le terminal demandeur (A1, A2, ..) étant mis en correspondance en tant que terminal virtuel dans la passerelle PMR ;
vi) le terminal virtuel demande d'effectuer un appel d'un terminal virtuel du terminal spécifique (B1, B2, ..) mis en correspondance dans la passerelle PMR de l'autre réseau PMR (B) et le terminal virtuel de la passerelle PMR de l'autre réseau PMR (B) établissant un appel au terminal spécifique (B1, B2) ; un cryptage de bout en bout n'étant affecté qu'au sein de chaque réseau PMR et de la liaison croisée.

2. Procédé selon la revendication 1, dans lequel la demande est destinée à un service de messagerie vocale instantanée PTT (Push-To-Talk).

3. Procédé selon la revendication 1 ou 2, dans lequel,
lors de l'étape vi), l'établissement d'un appel depuis la passerelle PMR dans l'autre réseau PMR (B) vers le terminal spécifique (B1, B2, ..) dépend d'une condition concernant l'état du terminal spécifique (B1, B2, ...).

4. Procédé selon la revendication 3, dans lequel
la condition a pour base une demande d'appel provenant du terminal spécifique (B1, B2, ..) et une demande de solution est invoquée afin d'évaluer le terminal (A1, A2, .. ; B1, B2, ..) qui sera remplacé conformément à sa priorité prédéfinie.

5. Procédé selon la revendication 3, dans lequel
le signal vocal provenant du terminal (A1, A2, ..) demandant le terminal spécifique (B1, B2, ..) est mis en tampon jusqu'à ce que le terminal spécifique (B1, B2, ..) autorise l'appel demandé.

6. Procédé selon la revendication 5, dans lequel
la mise en tampon du signal vocal se produit dans la passerelle PMR de l'autre réseau PMR (B).

7. Procédé selon l'une des revendications 1 à 6, dans lequel,
lors de l'étape v), la demande d'établissement d'un appel depuis un terminal (A1, A2, ..) d'un réseau PMR (A) se produit à destination d'une pluralité de terminaux spécifiques (B1, B2), dans l'autre réseau PMR, qui ont été définis précédemment.

8. Procédé selon l'une des revendications 1 à 7, dans lequel
les centres de commutation (SC, SwMI) affectent des canaux dans la liaison croisée indépendamment des appels demandés depuis un réseau PMR (A) vers l'autre réseau PMR.

9. Réseaux PMR (A, B, C) comportant des moyens permettant de mettre en oeuvre les étapes du procédé d'interconnexion d'au moins deux réseaux Radio Mobiles Privés PMR (A, B, C) selon l'une des revendications 1 à 8.
